# EUROPEAN PATENT APPLICATION

(11) **EP 3 960 400 A1**
(43) Date of publication of application: **02.03.2022**
(21) Application number: 20793968.7
(22) Date of filing: 17.04.2020
(51) Int. Cl.: B25J 19/00, B05B 12/00

(54) **SCAVENGING DEVICE, ROBOT SYSTEM, AND SCAVENGING METHOD**

(30) Priority: 26.04.2019 JP 2019085509
(71) Applicant: Kawasaki Jukogyo Kabushiki Kaisha, Hyogo 650-8670 (JP)
(72) Inventor: DEMURA, Nobuhiro, 650-8670 Kobe-shi (JP); OSAKO, Shingo, 650-8670 Kobe-shi (JP); MEDE, Osamu, 650-8670 Kobe-shi (JP)
(74) Representative: Witte, Weller & Partner Patentanwälte mbB
(86) International application number: PCT/JP2020/016863
(87) International publication number: WO 2020/218185

(57) **Abstract**

When purging is performed, a protective-gas adjusting device adjusts a pressure value of protective gas to be at a given first pressure value, and a pilot-air adjusting device adjusts a pilot pressure inputted to a first air-operated valve to open a first channel, and adjusts a pilot pressure inputted to a second air-operated valve to close a second channel. When the purging is finished, the protective-gas adjusting device adjusts the pressure value of the protective gas to be at a given second pressure value, and the pilot-air adjusting device adjusts the pilot pressure inputted to the first air-operated valve to close the first channel, and adjusts the pilot pressure inputted to the second air-operated valve to open the second channel.

## Description

### TECHNICAL FIELD

The present disclosure relates to a purging device, a robot system, and a purging method.

### BACKGROUND ART

Conventionally, purging devices which purge by supplying protective gas into a container are known. Patent Document 1 discloses a painting robot as one example of such purging devices.

The painting robot of Patent Document 1 is provided with a pneumatic unit which supplies protective gas to each driving unit of a manipulator, and a heater provided to a path of a gas-supplying system of the pneumatic unit. Therefore, according to Patent Document 1, the purging processing and warm-up processing can simultaneously be performed to shorten a period of time required for actuating the painting robot.

### [Reference Document of Conventional Art]

### [Patent Document]

[Patent Document 1] JP1998-202577A

### DESCRIPTION OF THE DISCLOSURE

### [Problem to be Solved by the Disclosure]

Generally, the purging device of Patent Document 1 and other conventional purging devices are provided with a protective-gas adjusting device. The protective-gas adjusting device is adjustable of a pressure value of the protective gas supplied from a protective-gas supplying source into a container so that the pressure value becomes a given first pressure value required for purging, and becomes a given second pressure value required for operation after the purging.

Moreover, generally, the conventional purging devices are further provided with a first channel and a first air-operated valve. The first channel extends from the container to a first discharging port provided near the container to discharge, from the first discharging port, the protective gas supplied from the protective-gas supplying source into the container. The first air-operated valve is provided to the first channel and switchable of opening and closing of the first channel according to a pilot pressure inputted from a pilot-air supplying source. Moreover, generally, the conventional purging devices are further provided with a pilot-air adjusting device adjustable of the pilot pressure inputted from the pilot-air supplying source to the first air-operated valve.

Here, in the conventional purging devices, the pilot-air adjusting device may not be disposed near the container (in other words, near the first air-operated valve), and the protective-gas adjusting device may not be disposed near the container.

In such a case, a difference may arise between a timing at which pilot air is actually inputted into the first air-operated valve at the pilot pressure adjusted by the pilot-air adjusting device, and a timing at which protective gas is actually supplied into the container at the pressure value adjusted by the protective-gas adjusting device. Accordingly, the purging may not appropriately be performed.

Therefore, one purpose of the present disclosure is to provide a purging device, a robot system, and a purging method, capable of appropriately purging even when a protective-gas adjusting device and a pilot-air adjusting device are not disposed near a container.

### [Summary of the Disclosure]

In order to solve the problem, a purging device according to the present disclosure purges by supplying protective gas into a container, and includes a protective-gas supplying source, a first pilot-air supplying source, a second pilot-air supplying source, a protective-gas adjusting device adjustable of a pressure value of the protective gas supplied from the protective-gas supplying source into the container to be at a given first pressure value required for purging, and at a given second pressure value required for operation after finishing the purging, a first channel extending from the container to a first discharging port provided near the container to discharge, from the first discharging port, the protective gas supplied from the protective-gas supplying source into the container, a first air-operated valve provided to the first channel and switchable of opening and closing of the first channel according to a pilot pressure inputted from the first pilot-air supplying source, a second channel extending from the first air-operated valve to a second discharging port provided near the first air-operated valve to discharge, from the second discharging port, pilot air inputted from the first pilot-air supplying source into the first air-operated valve, a second air-operated valve provided to the second channel and switchable of opening and closing of the second channel according to a pilot pressure inputted from the second pilot-air supplying source, and a pilot-air adjusting device adjustable of the pilot pressure inputted from the first pilot-air supplying source to the first air-operated valve, and the pilot pressure inputted from the second pilot-air supplying source to the second air-operated valve. When the purging is performed, the protective-gas adjusting device adjusts the pressure value of the protective gas to be at the given first pressure value, and the pilot-air adjusting device adjusts the pilot pressure inputted to the first air-operated valve to open the first channel, and adjusts the pilot pressure inputted to the second air-operated valve to close the second channel. When the purging is finished, the protective-gas adjusting device adjusts the pressure value of the protective gas to be at the given second pressure value, and the pilot-air adjusting device adjusts the pilot pressure inputted to the first air-operated valve to close the first channel, and adjusts the pilot pressure inputted to the second air-operated valve to open the second channel.

According to this configuration, since when the purging is finished, the pilot pressure inputted to the second air-operated valve is adjusted so as to open the second channel, the pilot air inputted into the first air-operated valve is discharged, through the second channel, from the second discharging port provided near the first air-operated valve. Therefore, it can be suppressed that a timing at which the pilot air is actually inputted into the first air-operated valve at the pilot pressure adjusted by the pilot-air adjusting device deviates from a timing at which the protective gas is actually supplied into the container at the pressure value adjusted by the protective-gas adjusting device. As a result, the purging device according to the present disclosure can appropriately purge even when the protective-gas adjusting device and the pilot-air adjusting device cannot be disposed near the container.

The purging device may further include a third channel extending from the pilot-air adjusting device to the first air-operated valve to input pilot air from the pilot-air adjusting device into the first air-operated valve, and a fourth channel extending from the pilot-air adjusting device to the second air-operated valve to input pilot air from the pilot-air adjusting device into the second air-operated valve, and to discharge through the pilot-air adjusting device the pilot air inputted into the second air-operated valve. The second channel includes an end part of the third channel on a first air-operated valve side, and a branched part branched from the end part of the third channel on the first air-operated valve side to extend to the second discharging port. When the purging is performed, the pilot-air adjusting device may adjust the pilot pressure inputted to the first air-operated valve such that pilot air is inputted into the first air-operated valve through the third channel, and adjust the pilot pressure inputted to the second air-operated valve such that the pilot air inputted into the second air-operated valve is discharged through the fourth channel and the pilot-air adjusting device. When the purging is finished, the pilot-air adjusting device may adjust the pilot pressure inputted to the first air-operated valve such that the pilot air inputted into the first air-operated valve is discharged from the second discharging port through the second channel, and adjust the pilot pressure inputted to the second air-operated valve such that pilot air is inputted into the second air-operated valve through the fourth channel.

According to this, the configuration of the purging device according to the present disclosure can be simplified.

At least two of the protective-gas supplying source and the first and second pilot-air supplying sources may be included in a single gas supplying source.

According to this, the configuration of the purging device according to the present disclosure can be simplified.

The purging device may further include a fifth channel extending from the protective-gas supplying source to the container to supply the protective gas from the protective-gas supplying source into the container, and a third pilot-air supplying source. The fifth channel may include a first part and a second part extending separately, a merging part located downstream of the first and second parts and at which the first part and the second part merge, and a third part extending from the merging part to the container. The protective-gas adjusting device may include a first pressure regulator provided to the first part and configured to supply the protective gas into the container at the given first pressure value, a second pressure regulator provided to the second part and configured to supply the protective gas into the container at the given second pressure value, and a third air-operated valve provided to the merging part and switchable of whether to connect the first part to the third part, or to connect the second part to the third part, according to a pilot pressure inputted from the third pilot-air supplying source. When the purging is performed, the pilot-air adjusting device may adjust the pilot pressure inputted to the third air-operated valve to connect the first part to the third part. When the purging is finished, the pilot-air adjusting device may adjust the pilot pressure inputted to the third air-operated valve to connect the second part to the third part.

According to this configuration, since the protective-gas adjusting device includes the third air-operated valve and the pilot-air adjusting device controls the third air-operated valve, the pressure value of the protective gas to be supplied into the container can be adjusted, which makes it possible to further appropriately perform purging.

The purging device may further include a sixth channel extending from the pilot-air adjusting device to the third air-operated valve to input pilot air from the pilot-air adjusting device into the third air-operated valve, and to discharge the pilot air inputted into the third air-operated valve through the pilot-air adjusting device. When the purging is performed, the pilot-air adjusting device may adjust the pilot pressure inputted to the third air-operated valve such that pilot air is inputted into the third air-operated valve through the sixth channel. When the purging is finished, the pilot-air adjusting device may adjust the pilot pressure inputted to the third air-operated valve such that the pilot air inputted into the third air-operated valve is discharged through the sixth channel and the pilot-air adjusting device.

According to this, the configuration of the purging device according to the present disclosure can be simplified.

The third pilot-air supplying source may be included in a single gas supplying source together with at least one of the protective-gas supplying source and the first and second pilot-air supplying sources.

According to this, the configuration of the purging device according to the present disclosure can be simplified.

The purging device may further include a first controller configured to control the protective-gas adjusting device, and a second controller configured to control the pilot-air adjusting device.

According to this configuration, the purging device according to the present disclosure can perform purging easily and more appropriately.

For example, the protective-gas supplying source, the first and second pilot-air supplying sources, the protective-gas adjusting device, and the pilot-air adjusting device may be disposed in a first area where explosive atmosphere does not exist. The first and second discharging ports, the first and second channels, and the first and second air-operated valves may be disposed, together with the container, in a second area where explosive atmosphere exists.

In order to solve the problems, a robot system according to the present disclosure includes the purging device of any one described above, and a robot having the container. The robot includes a robotic arm having at least one joint axis, an end effector provided to a tip end of the robotic arm, and a robot controlling device configured to control operation of the robotic arm and the end effector. The container is configured to define a periphery of at least a part of the robot.

For example, the robot may be configured to be a painting robot configured to perform a painting work.

According to this configuration, since the robot system according to the present disclosure uses the purging device of any one described above, even when the protective-gas adjusting device and the pilot-air adjusting device cannot be disposed near the container, the purging can be appropriately performed.

In order to solve the problems, according to the present disclosure, a method of purging by supplying protective gas into a container is provided, which includes preparing the purging device of any one of claims 1 to 8, and the container (First Step). The method includes, after First Step, attaching the purging device to the container (Second Step). The method includes, after First and Second Steps, adjusting, by the protective-gas adjusting device, the pressure value of the protective gas to be at the given first pressure value, and adjusting, by the pilot-air adjusting device, the pilot pressure inputted to the first air-operated valve to open the first channel, and the pilot pressure inputted to the second air-operated valve to close the second channel (Third Step). The method includes, after First to Third Steps, adjusting, by the protective-gas adjusting device, the pressure value of the protective gas to be at the second pressure value, and adjusting, by the pilot-air adjusting device, the pilot pressure inputted to the first air-operated valve to close the first channel, and the pilot pressure inputted to the second air-operated valve to open the second channel (Fourth Step).

According to this configuration, since the purging method according to the present disclosure uses the purging device of any one described above, even when the protective-gas adjusting device and the pilot-air adjusting device cannot be disposed near the container, the purging can be appropriately performed.

### [Effect of the Disclosure]

According to the present disclosure, a purging device, a robot system, and a purging method can be provided, which are capable of appropriately purging even when a protective-gas adjusting device and a pilot-air adjusting device are not disposed near a container.

### BRIEF DESCRIPTION OF DRAWINGS

Fig. 1 is a schematic view illustrating a situation where a purging device and a robot system having the purging device purge according to one embodiment of the present disclosure.
Fig. 2 is a schematic view illustrating a situation where the purging device and the robot system having the purging device operate after finishing the purging according to this embodiment of the present disclosure.
Fig. 3 is a block diagram illustrating a control system of the purging device and the robot system having the purging device according to this embodiment of the present disclosure.
Fig. 4 is a flowchart illustrating one example of a purging method using the purging device according to this embodiment of the present disclosure.
Figs. 5(A) and 5(B) are schematic views illustrating a result of an experiment carried out by the present inventors to confirm effects of the purging device, where Fig. 5(A) is a graph illustrating a situation where a pilot pressure of an air-operated valve decreases after finishing purging by a conventional purging device, and Fig. 5(B) is a graph illustrating a situation where a pilot pressure of an air-operated valve decreases after finishing the purging by the purging device according to this embodiment of the present disclosure.
Figs. 6(A) and 6(B) are schematic views illustrating the conventional purging device and a robot system having the purging device, where Fig. 6(A) is a view illustrating a situation of purging, and Fig. 6(B) is a view illustrating a situation of operation after finishing the purging.

### MODES FOR CARRYING OUT THE DISCLOSURE

### (Entire Configuration)

Hereinafter, a purging device, a robot system, and a purging method according to one embodiment of the present disclosure are described with reference to the drawings. Note that the present disclosure is not limited to this embodiment. Moreover, below, the same reference characters are given to the same or corresponding components throughout the drawings to omit redundant description.

### (Robot System 10)

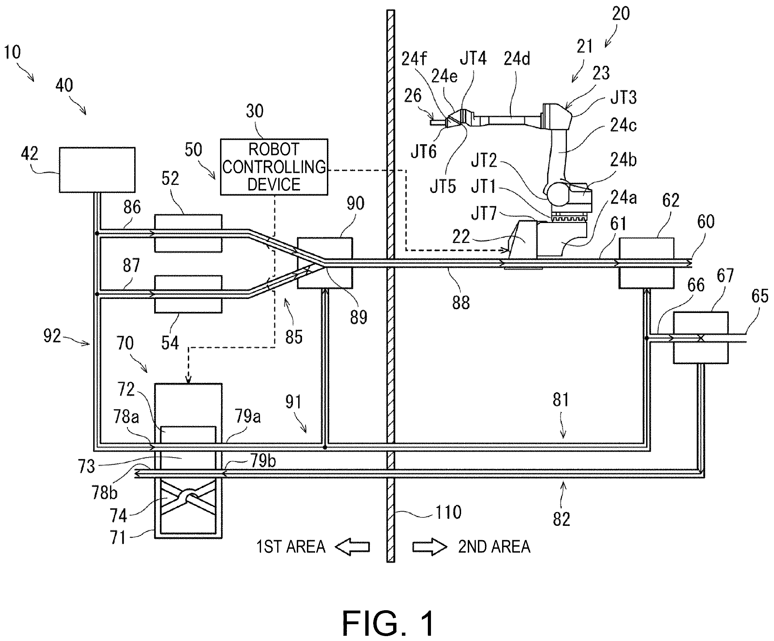

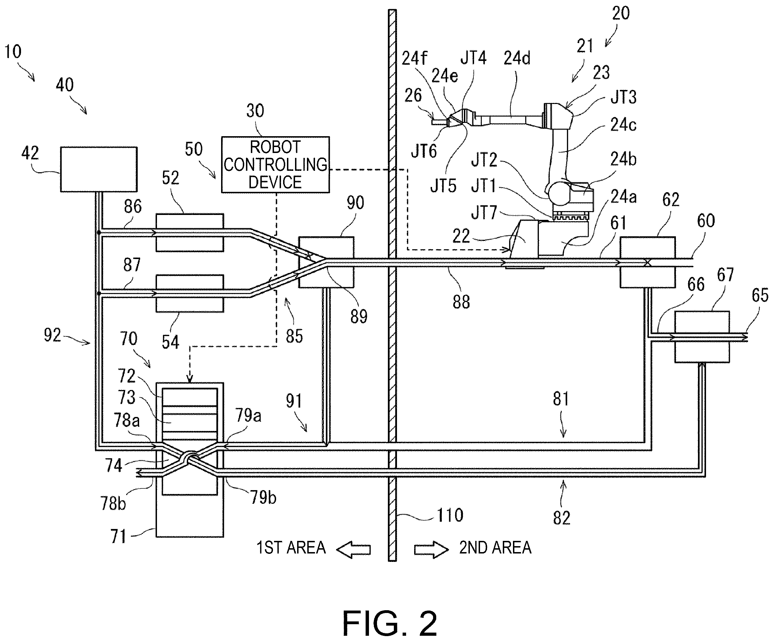

Fig. 1 is a schematic view illustrating a situation where the purging device and the robot system having the purging device purge according to this embodiment. Fig. 2 is a schematic view illustrating a situation where the purging device and the robot system having the purging device operate after finishing the purging. As illustrated in Figs. 1 and 2, a robot system 10 is provided with a robot 20 which performs a painting work in a first area where explosive atmosphere exists, and a purging device 40 which supplies protective gas to the robot 20 (in detail, to a container 21 of the robot 20) to purge. Moreover, the robot system 10 is further provided with a partition 110 which divides between the first area where explosive atmosphere exists, and a second area where explosive atmosphere does not exist.

The robot 20 according to this embodiment is a painting robot which performs painting to an automobile etc. Therefore, in this embodiment, the first area is a painting site. Atmosphere at the painting site is mixed with vaporized gas of organic solvents contained in paint, and often becomes flammable gas (or explosive gas). If electrical equipment is used in such a first area without any measures, a spark induced by a supply of power leads to explosion.

The robot 20 is provided with a plurality of electrical equipment inside the container 21 defining a part of a periphery of the robot 20. Therefore, before the robot 20 is energized, flammable gas which entered into the container 21 is required to be eliminated. Thus, purging is performed by supplying protective gas into the container 21 using the purging device 40.

### (Robot 20)

The robot 20 includes a pedestal 22, a robotic arm 23 coupled to the pedestal 22, an end effector 26 attached to a tip-end part of the robotic arm 23, and a robot controlling device 30 which controls operation of the robotic arm 23 and the end effector 26.

The robotic arm 23 includes seven joint shafts (axes) JT1-JT7, and six links 24a-24f serially coupled to each other via these joint shafts. Each of the joint shafts JT1-JT7 of the robotic arm 23 is rotatable by a servomotor (not illustrated).

The joint shaft JT1 couples a tip-end part of the link 24a to a base-end part of the link 24b so as to be rotatable about a vertical axis. The joint shaft JT2 couples a tip-end part of the link 24b to a base-end part of the link 24c so as to be rotatable about a horizontal axis. The joint shaft JT3 couples a tip-end part of the link 24c to a base-end part of the link 24d so as to be rotatable about a horizontal axis.

The joint shaft JT4 couples a tip-end part of the link 24d to a base-end part of the link 24e so as to be rotatable in a twisted manner. The joint shaft JT5 couples a tip-end part of the link 24e to a base-end part of the link 24f so as to be rotatable in the twisted manner. The joint shaft JT6 couples a tip-end part of the link 24f (i.e., a tip-end part of the robotic arm 23) to a base-end part of the end effector 26 so as to be rotatable in the twisted manner. Further, the joint shaft JT7 couples the pedestal 22 to a base-end part of the link 24a so as to be rotatable about a horizontal axis.

The container 21 of the robot 20 may be formed, for example, to define the periphery of a part from the pedestal 22 to the joint shaft JT3 of the robotic arm 23.

The robot controlling device 30 is provided in the first area where explosive atmosphere does not exist. Although a concrete configuration of the robot controlling device 30 is not limited in particular, for example, it is implemented by a known processor (e.g., a CPU) operating in accordance with a program stored in a storage device (e.g., a memory).

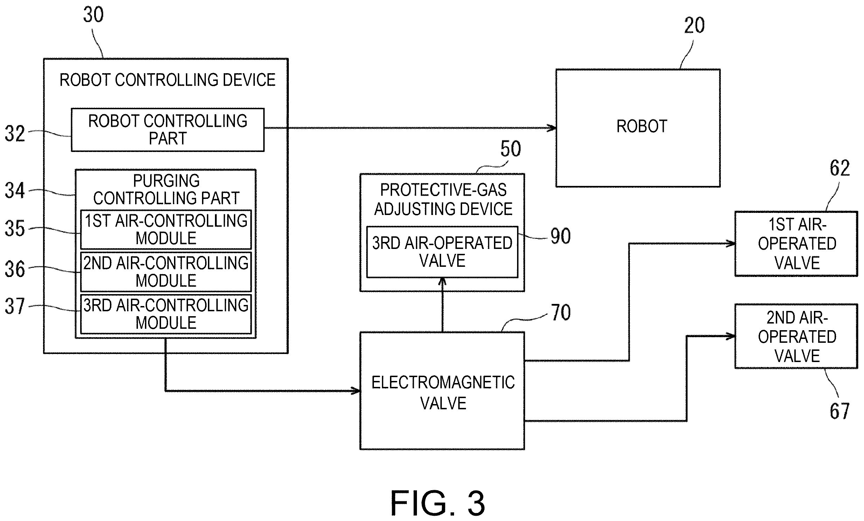

Fig. 3 is a block diagram illustrating a control system of the purging device and the robot system having the purging device according to this embodiment. As illustrated in Fig. 3, the robot controlling device 30 includes a robot controlling part 32 which controls operation of the robotic arm 23 and the end effector 26, and a purging controlling part 34 (a first controller and a second controller) which controls the purging device 40.

### (Configuration of Purging Device 40)

The purging device 40 is provided with a gas supplying source 42 (a protective-gas supplying source, and first and second pilot-air supplying sources). Note that, in this embodiment, the gas supplying source 42 is configured to be a single gas supplying source which supplies protective gas into the container 21 through a protective-gas adjusting device 50 (described later), and inputs through an electromagnetic valve 70 (described later) pilot air into each of a first air-operated valve 62, a second air-operated valve 67, and a third air-operated valve 90. Moreover, in this embodiment, atmosphere existing in the first area is used as the protective gas and the pilot air.

The purging device 40 is further provided with the protective-gas adjusting device 50. The protective-gas adjusting device 50 is adjustable of a pressure value of protective gas supplied from the gas supplying source 42 into the container 21 to be at a given first pressure value required for purging, and to be at a given second pressure value required for operation after purging. Note that the first pressure value is larger than the second pressure value.

The purging device 40 is further provided with a first channel 61 and the first air-operated valve 62. The first channel 61 extends from the container 21 to a first discharging port 60 provided near the container 21 to discharge, from the first discharging port 60, the protective gas supplied from the gas supplying source 42 into the container 21. The first air-operated valve 62 is provided to the first channel 61 and switchable of opening and closing of the first channel 61 according to a pilot pressure inputted from the gas supplying source 42 (first pilot-air supplying source).

The purging device 40 is further provided with a second channel 66 and the second air-operated valve 67. The second channel 66 extends from the first air-operated valve 62 to a second discharging port 65 provided near the first air-operated valve 62 to discharge, from the second discharging port 65, pilot air inputted from the gas supplying source 42 (same as above) into the first air-operated valve 62. The second air-operated valve 67 is provided to the second channel 66 and switchable of opening and closing of the second channel 66 according to a pilot pressure inputted from the gas supplying source 42 (second pilot-air supplying source).

The purging device 40 is further provided with the electromagnetic valve 70 (pilot-air adjusting device) which can adjust the pilot pressure inputted from the gas supplying source 42 (first pilot-air supplying source) to the first air-operated valve 62, and adjust the pilot pressure inputted from the gas supplying source 42 (second pilot-air supplying source) to the second air-operated valve 67. The electromagnetic valve 70 is disposed in the first area where explosive atmosphere does not exist.

The purging device 40 is further provided with a third channel 81 extending from the electromagnetic valve 70 to the first air-operated valve 62 to input pilot air from the electromagnetic valve 70 into the first air-operated valve 62, and a fourth channel 82 extending from the electromagnetic valve 70 to the second air-operated valve 67 to input pilot air from the electromagnetic valve 70 into the second air-operated valve 67, and to discharge, through the electromagnetic valve 70, the pilot air inputted into the second air-operated valve 67. The second channel 66 includes an end part of the third channel 81 on the first air-operated valve 62 side, and a branched part branched from the end part to extend to the second discharging port 65.

The purging device 40 is further provided with a fifth channel 85 extending from the gas supplying source 42 (protective-gas supplying source) to the container 21 so as to supply protective gas from the gas supplying source 42 into the container 21. The fifth channel 85 has a first part 86 and a second part 87 located in the first area and extending separately, a merging part 89 located downstream of the first and second parts 86 and 87 in the first area and where the first part 86 and the second part 87 merge, and a third part 88 extending from the merging part 89 to the container 21.

The protective-gas adjusting device 50 has a first pressure regulator 52 provided to the first part 86 and which supplies protective gas into the container 21 at the given first pressure value, a second pressure regulator 54 provided to the second part 87 and which supplies protective gas into the container 21 at the given second pressure value, and the third air-operated valve 90 provided to the merging part 89 and which switches whether to connect the first part 86 to the third part 88, or to connect the second part 87 to the third part 88, according to a pilot pressure inputted from the gas supplying source 42 (third pilot-air supplying source).

The purging device 40 is further provided with a sixth channel 91 extending from the electromagnetic valve 70 to the third air-operated valve 90 to input pilot air from the electromagnetic valve 70 into the third air-operated valve 90, and to discharge, through the electromagnetic valve 70, the pilot air inputted into the third air-operated valve 90. The sixth channel 91 includes an end part of the third channel 81 on the electromagnetic valve 70 side, and a branched part branched from the end part to extend to the third air-operated valve 90.

The purging device 40 is further provided with a seventh channel 92 extending from the gas supplying source 42 to the electromagnetic valve 70 to supply pilot air from the gas supplying source 42 into the electromagnetic valve 70. The first and second parts 86 and 87 of the fifth channel 85 are configured as branched parts branched from the seventh channel 92.

The electromagnetic valve 70 has a cylinder 71 and a piston 72 which is reciprocatable inside the cylinder 71 in its axial direction.

A supplying part 78a is provided on the gas supplying source 42 side of the cylinder 71. The supplying part 78a extends from the seventh channel 92 to the piston 72 while penetrating a side surface of the cylinder 71 to deliver pilot air from the seventh channel 92 to the piston 72. Moreover, a discharging part 78b is provided on the gas supplying source 42 side of the cylinder 71. The discharging part 78b extends from the piston 72 to the outside while penetrating the side surface of the cylinder 71 to discharge the pilot air which is supplied from the fourth channel 82 or the sixth channel 91 into the piston 72.

A first downstream part 79a is provided on the side of the cylinder 71 opposite from the gas supplying source 42. The first downstream part 79a extends from the third and sixth channels 81 and 91 to the piston 72 while penetrating the side surface of the cylinder 71 to deliver the pilot air, which is supplied from the seventh channel 92 into the piston 72, to the third and sixth channels 81 and 91, or to deliver pilot air from the sixth channel 91 into the piston 72. Moreover, a second downstream part 79b is provided on the side of the cylinder 71 opposite from the gas supplying source 42. The second downstream part 79b extends from the piston 72 to the fourth channel 82 while penetrating the side surface of the cylinder 71 to deliver pilot air from the fourth channel 82 into the piston 72, or to deliver the pilot air, which is supplied from the seventh channel 92 into the piston 72, to the fourth channel 82.

The piston 72 is provided with, in its upper part, a purging channel 73 for purging. The purging channel 73 has two channels extending in a width direction of the piston 72. As illustrated in Fig. 1, during the purging, the electromagnetic valve 70 positions the piston 72 at a lower part inside the cylinder 71 so as to connect the seventh channel 92 to the third and sixth channels 81 and 91 via the supplying part 78a, one of the channels of the purging channel 73, and the first downstream part 79a, and to connect the fourth channel 82 to the discharging part 78b via the second downstream part 79b and the other channel of the purging channel 73.

The piston 72 is provided with, in its lower part, an operation channel 74 for the operation after finishing the purging. The operation channel 74 has one channel inclining to the lower side of the piston 72 from the upstream toward the downstream, and the other channel inclining to the upper side of the piston 72 from the upstream toward the downstream. As illustrated in Fig. 2, during the operation after finishing the purging, the electromagnetic valve 70 positions the piston 72 upward inside the cylinder 71 to connect the seventh channel 92 to the fourth channel 82 via the supplying part 78a, the one channel of the operation channel 74, and the second downstream part 79b, and to connect the sixth channel 91 to the discharging part 78b via the first downstream part 79a and the other channel of the operation channel 74.

As illustrated in Fig. 3, the purging device 40 further includes the purging controlling part 34 in the robot controlling device 30. The purging controlling part 34 includes a first air-controlling module 35 which controls the first air-operated valve 62, a second air-controlling module 36 which controls the second air-operated valve 67, and a third air-controlling module 37 which controls the third air-operated valve 90. Note that in this embodiment the purging controlling part 34 integrally controls the first to third air-operated valves 62, 67 and 90. Therefore, in this embodiment, the purging controlling part 34 does not separately have the first to third air-controlling modules 35, 36 and 37 in a visible mode.

### (Example of Purging Mode)

Referring to Fig. 1, one example of a mode of purging performed using the purging device 40 according to this embodiment is described. As illustrated in Fig. 1, when the purging device 40 according to this embodiment purges, it controls the electromagnetic valve 70 by the purging controlling part 34 of the robot controlling device 30 to position the piston 72 downward inside the cylinder 71.

By the piston 72 being positioned downward as described above, the purging device 40 according to this embodiment adjusts, by the electromagnetic valve 70, the pilot pressure inputted to the third air-operated valve 90 such that the pilot air is inputted into the third air-operated valve 90 through the sixth channel 91. Accordingly, the third air-operated valve 90 connects the first part 86 to the third part 88 so that protective gas is supplied into the container 21 at the given first pressure value required for purging.

Moreover, by the piston 72 being positioned downward as described above, the purging device 40 according to this embodiment adjusts, by the electromagnetic valve 70, the pilot pressure inputted to the first air-operated valve 62 such that the pilot air is inputted into the first air-operated valve 62 through the third channel 81, and also adjusts, by the electromagnetic valve 70, the pilot pressure inputted to the second air-operated valve 67 such that the pilot air inputted into the second air-operated valve 67 is discharged through the fourth channel 82 and the electromagnetic valve 70. Accordingly, the first air-operated valve 62 opens the first channel 61, and the second air-operated valve 67 closes the second channel 66.

Note that, in a state immediately before the purging, and when pilot air is not inputted into the second air-operated valve 67, the pilot pressure inputted to the second air-operated valve 67 may be adjusted such that the pilot air is discharged through the fourth channel 82 and the electromagnetic valve 70, assuming that the pilot air is inputted into the second air-operated valve 67.

In this manner, the protective-gas adjusting device 50 according to this embodiment supplies protective gas into the container 21 at the given first pressure value required for purging, and discharges from the second discharging port 65 provided near the container 21, the protective gas supplied into the container 21.

### (Example of Operation Mode after Finishing Purging)

Referring to Fig. 2, one example of an operation mode after finishing the purging performed using the purging device 40 according to this embodiment, is described. As illustrated in Fig. 2, when the purging is finished, the purging device 40 according to this embodiment controls the electromagnetic valve 70 by the purging controlling part 34 of the robot controlling device 30 to position the piston 72 upward inside the cylinder 71.

By the piston 72 being positioned upward as described above, the purging device 40 according to this embodiment adjusts, by the electromagnetic valve 70, the pilot pressure inputted to the third air-operated valve 90 such that the pilot air inputted into the third air-operated valve 90 is discharged through the sixth channel 91 and the electromagnetic valve 70. Accordingly, the third air-operated valve 90 connects the second part 87 to the third part 88, and protective gas is supplied into the container 21 at the given second pressure value required for the operation after finishing the purging.

Moreover, by the piston 72 being positioned upward as described above, the purging device 40 according to this embodiment adjusts, by the electromagnetic valve 70, the pilot pressure inputted to the first air-operated valve 62 such that the pilot air inputted into the first air-operated valve 62 is discharged from the second discharging port 65 through the second channel 66, and adjusts, by the electromagnetic valve 70, the pilot pressure inputted to the second air-operated valve 67 such that the pilot air is inputted into the second air-operated valve 67 through the fourth channel 82. Accordingly, the first air-operated valve 62 closes the first channel 61, and the second air-operated valve 67 opens the second channel 66.

In this manner, the purging device 40 according to this embodiment supplies protective gas into the container 21 at the given second pressure value required for the operation after finishing the purging, and stagnates inside the container 21 the protective gas supplied thereto. Then, the operation after the purging is performed while maintaining this state. In detail, while maintaining this state, the robot controlling part 32 of the robot controlling device 30 controls operation of the robotic arm 23 and the end effector 26 to perform the painting work by the robot 20.

### (Effects)

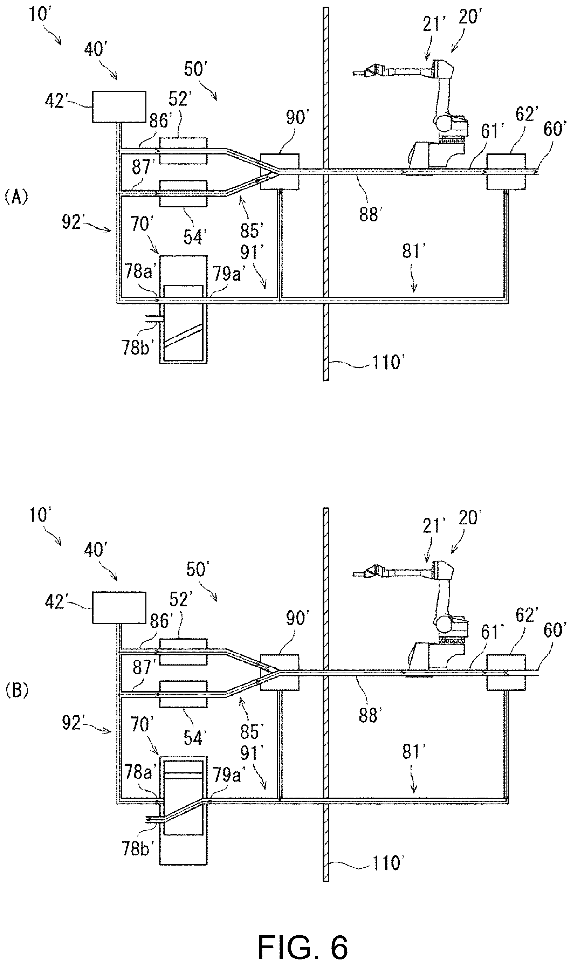

In order to describe effects of the purging device 40 according to this embodiment, first, a conventional purging device is described with reference to Figs. 6(A) and 6(B). Figs. 6(A) and 6(B) are schematic views illustrating the conventional purging device and a robot system having the purging device, where Fig. 6(A) is a view illustrating a situation of purging, and Fig. 6(B) is a view illustrating a situation of operation after finishing the purging.

Note that, as illustrated in Fig. 6, a conventional purging device 40' and a robot system 10' have the same configuration as the purging device 40 and the robot system 10 according to this embodiment, respectively, except for that the second discharging port 65, the second channel 66, the second air-operated valve 67, and the fourth channel 82 are not provided, and for the configuration of the electromagnetic valve 70.

Therefore, components corresponding to the purging device 40 and the robot system 10 according to this embodiment are denoted by the same reference characters as those used for the purging device 40 and the robot system 10, with additional ' (apostrophe) after each reference character, and similar description is not repeated. Note that illustration of a robot controlling device 30' is omitted to be simplified in appearance.

As illustrated in Fig. 6(A), when purging is performed, the conventional purging device 40' adjusts, by an electromagnetic valve 70', a pilot pressure inputted to a first air-operated valve 62' such that pilot air is inputted into the first air-operated valve 62' through a third channel 81'. Accordingly, the first air-operated valve 62' opens a first channel 61', and protective air supplied into a container 21' is discharged from a first discharging port 60'.

Then, as illustrated in Fig. 6(B), after the purging is finished, the conventional purging device 40' adjusts, by the electromagnetic valve 70', the pilot pressure inputted to the first air-operated valve 62' such that the pilot air inputted into the first air-operated valve 62' is discharged from a discharging part 78b' through the third channel 81' and the electromagnetic valve 70'. Accordingly, the first air-operated valve 62' closes the first channel 61', and the protective gas supplied into the container 21' stagnates inside the container 21'.

However, as illustrated in Fig. 6(B), when the purging is finished, the conventional purging device 40' is configured to discharge the pilot air inputted into the first air-operated valve 62' from the discharging part 78b', through the third channel 81' which is comparatively long. Therefore, the pilot air takes comparatively long period of time to flow out of the first air-operated valve 62'.

Accordingly, a timing at which the first air-operated valve 62' closes the first channel 61' is delayed from a timing at which the protective-gas adjusting device 50' supplies protective gas into the container 21' at the given second pressure value required for the operation after finishing the purging. Then, although the protective gas is supplied into the container 21' at the given second pressure value, the first channel 61' is not closed for a certain period. As a result, explosive atmosphere existing in the second area may enter into the container 21', which may cause explosion.

On the other hand, when the purging is finished, the purging device 40 according to this embodiment adjusts the pilot pressure inputted to the second air-operated valve 67 such that the second channel 66 is opened. Accordingly, the pilot air inputted into the first air-operated valve 62 is discharged, through the second channel 66, from the second discharging port 65 provided near the first air-operated valve 62.

Therefore, the pilot air does not take time to flow out of the first air-operated valve 62'. Thus, it can be suppressed that the timing at which the first air-operated valve 62' closes the first channel 61' delays from the timing at which the protective-gas adjusting device 50' supplies protective gas into the container 21' at the given second pressure value required for the operation after finishing the purging.

In other words, it can be suppressed that a timing at which the pilot air is actually inputted into the first air-operated valve 62 at the pilot pressure adjusted by the electromagnetic valve 70 (pilot-air adjusting device) deviates from a timing at which the protective gas is actually supplied into the container 21 at the pressure value adjusted by the protective-gas adjusting device 50. As a result, the purging device 40 according to this embodiment can appropriately purge even when the protective-gas adjusting device 50 and the electromagnetic valve 70 cannot be disposed near the container 21.

Moreover, in this embodiment, the second channel 66 and the third channel 81 share the end part on the first air-operated valve 62 side. Moreover, the second channel 66 is used not only to input pilot air into the second air-operated valve 67, but also to discharge the pilot air inputted into the second air-operated valve 67. Therefore, the configuration of the purging device 40 according to this embodiment can be simplified.

Moreover, in this embodiment, the protective-gas supplying source which supplies protective gas into the container 21, the first pilot-air supplying source which supplies pilot air to the first air-operated valve 62, the second pilot-air supplying source which supplies pilot air to the second air-operated valve 67, and the third pilot-air supplying source which supplies pilot air to the third air-operated valve 90 are included in the single gas supplying source 42. Therefore, the configuration of the purging device 40 according to this embodiment can be simplified.

Moreover, in this embodiment, the protective-gas adjusting device 50 has the third air-operated valve 90, and the third air-operated valve 90 is controlled by the electromagnetic valve 70 (pilot-air adjusting device) to adjust the pressure value of protective gas supplied into the container 21. Accordingly, for example, the pressure value of the protective gas can be adjusted by using a small amount of air at a comparatively high pressure, and thus, purging can be performed more appropriately.

Moreover, in this embodiment, the sixth channel 91 is used not only to input pilot air into the third air-operated valve 90, but also to discharge the pilot air inputted into the third air-operated valve 90. Therefore, the configuration of the purging device 40 according to this embodiment can be simplified.

### (Example of Purging Method)

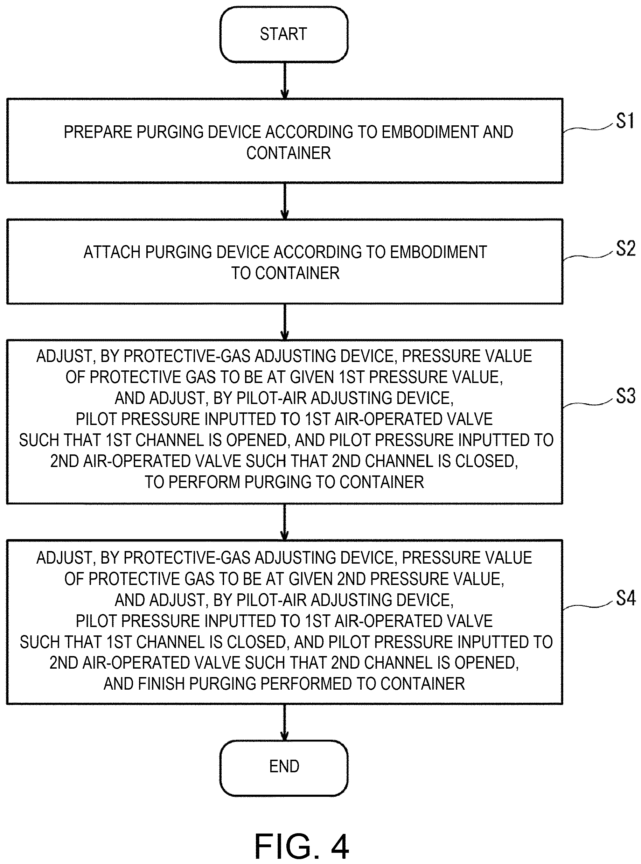

Referring to Fig. 4, one example of a purging method using the purging device 40 according to the above embodiment is described. Fig. 4 is a flowchart illustrating one example of the purging method using the purging device according to this embodiment.

First, the purging device 40 according to the above embodiment and the robot 20 (container) are prepared. In this embodiment, Step S1 (First Step) illustrated in Fig. 4 is performed in this manner.

Next, the purging device 40 according to the above embodiment is attached to the container 21 of the robot 20. In this embodiment, Step S2 (Second Step) illustrated in Fig. 4 is performed in this manner.

Then, the protective-gas adjusting device 50 adjusts the pressure value of the protective gas to be at the given first pressure value, and the electromagnetic valve 70 (pilot-air adjusting device) adjusts the pilot pressure inputted to the first air-operated valve 62 such that the first channel 61 is opened, and adjusts the pilot pressure inputted to the second air-operated valve 67 such that the second channel 66 is closed. In this embodiment, Step S3 (Third Step) illustrated in Fig. 4 is performed in this manner.

Finally, the protective-gas adjusting device 50 adjusts the pressure value of the protective gas to be at the given second pressure value, and the electromagnetic valve 70 (pilot-air adjusting device) adjusts the pilot pressure inputted to the first air-operated valve 62 such that the first channel 61 is closed, and adjusts the pilot pressure inputted to the second air-operated valve 67 such that the second channel 66 is opened. In this embodiment, Step S4 (Fourth Step) illustrated in Fig. 4 is performed in this manner.

In such a manner, the purging method using the purging device according to the above embodiment can be performed.

### (Modifications)

It is apparent for a person skilled in the art from the above description that many improvements and other embodiments of the present disclosure are possible. Therefore, the above description is to be interpreted only as illustration, and it is provided in order to teach a person skilled in the art the best mode for implementing the present disclosure. The details of the structures and/or the functions may be substantially changed, without departing from the spirit of the present disclosure.

In the above embodiment, the protective-gas supplying source and the first to third pilot-air supplying sources are included in the single gas supplying source 42. However, it is not limited to the case, but at least two of the protective-gas supplying source and the first to third pilot-air supplying sources may be included in a single gas supplying source. Alternatively, each of the protective-gas supplying source and the first to third pilot-air supplying sources may be provided separately.

In such a case, the third pilot-air supplying source may be included in a single pilot supplying source together with only the first pilot-air supplying source, be included in a single pilot supplying source together with only the second pilot-air supplying source, or be provided separately from the first and second pilot-air supplying sources. Alternatively, the first pilot-air supplying source may be provided separately from the second pilot-air supplying source.

In the embodiment described above, the purging controlling part 34 (the first controller and the second controller) are included in the robot controlling device 30. However, it is not limited to the case, but the purging controlling part 34 may be provided separately from the robot controlling device 30. Moreover, the first to third air-controlling modules 35, 36, and 37 may not be included in the single purging controlling part 34, but each may be provided separately. Moreover, for example, the first controller which controls the protective-gas adjusting device 50 may be provided separately from the second controller which controls the electromagnetic valve 70.

In the embodiment described above, the protective-gas adjusting device 50 is comprised of the first and second pressure regulators 52 and 54, and the third air-operated valve 90. However, it is not limited to the case, but the protective-gas adjusting device 50 may be comprised of, for example, an electromagnetic valve, or other configurations.

In the embodiment described above, the pilot-air adjusting device is configured to be the electromagnetic valve 70. However, it is not limited to the case, but the pilot-air adjusting device may have, for example, an arbitrary configuration with an air-operated valve, or other configurations.

In the embodiment described above, the robot 20 is a painting robot which performs painting to an automobile etc., and the second area is the painting site. However, it is not limited to the case, but the robot 20 may be a robot which performs a work at a petrol station, or may be other robots which perform a work at a site where purging is necessary.

In the embodiment described above, the gas supplying source 42 (the protective-gas supplying source and the first to third pilot-air supplying sources), the protective-gas adjusting device 50, and the electromagnetic valve 70 (pilot-air adjusting device) are placed in the first area where explosive atmosphere does not exist, and the first and second discharging ports 60 and 65, the first and second channels 61 and 66, and the first and second air-operated valves 62 and 67 are placed, together with the container 21, in the second area where explosive atmosphere exists.

However, it is not limited to the case, but, for example, if the gas supplying source 42 (the protective-gas supplying source and the first to third pilot-air supplying sources), the protective-gas adjusting device 50, and the electromagnetic valve 70 have an explosion-proof structure, these components may be placed in the second area. Alternatively, at least one of the gas supplying source 42, the protective-gas adjusting device 50, and the electromagnetic valve 70 may have the explosion-proof structure, and only the component with the explosion-proof structure may be placed in the second area.

Moreover, if the robot 20 is a cleaning (washing) robot which works at a cleaning site where explosive atmosphere does not exist, and requires purging, the first and second discharging ports 60 and 65, the first and second channels 61 and 66, and the first and second air-operated valves 62 and 67 may be placed, together with the robot 20, in the first area (i.e., all the components may be placed in the same area).

In the embodiment described above, the purging device 40 is provided to the robot 20. However, it is not limited to the case, but the purging device 40 may be provided to electrical equipment other than the robot 20.

### (Experimental Example)

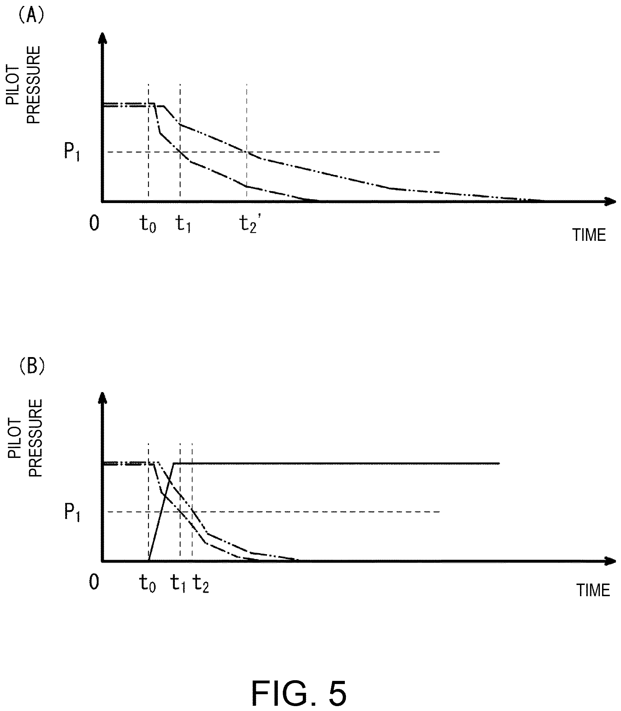

Below, an experiment carried out by the present inventors to confirm the effects of the present disclosure, is described. Figs. 5(A) and 5(B) are schematic views illustrating a result of the experiment carried out by the present inventors to confirm the effects of the purging device according to the embodiment described above, where Fig. 5(A) is a graph illustrating a situation where a pilot pressure of each air-operated valve decreases after finishing purging by the conventional purging device, and Fig. 5(B) is a graph illustrating a situation where the pilot pressure of each air-operated valve decreases after finishing the purging by the purging device according to the embodiment of the present disclosure. In Figs. 5(A) and 5(B), the vertical axis indicates a pilot pressure, and the horizontal axis indicates time.

In Fig. 5(A), the first air-operated valve 62' of the purging device 40' is indicated by a two-dot chain line, and a third air-operated valve 90' is indicated by a one-dot chain line. Each of the first and third air-operated valves 62' and 90' is turned OFF when the pilot pressure becomes P₁.

A timing at which the purging is finished and the piston of the electromagnetic valve 70' is moved upward so that the electromagnetic valve 70' is turned OFF, is a time t₀. Moreover, a timing at which the third air-operated valve 90' is turned OFF, and a second part 87' of a fifth channel 85' is connected to a third part 88', is a time t₁. Then, a timing at which the first air-operated valve 62' is turned OFF, and the first channel 61' is closed, is a time t₂'.

In Fig. 5(B), the first air-operated valve 62 of the purging device 40 according to the above embodiment is indicated by a two-dot chain line, the second air-operated valve 67 is indicated by a solid line, and the third air-operated valve 90 is indicated by a one-dot chain line. Similarly to the case in Fig. 5(A), each of the first and second air-operated valve 62 and 67 is turned OFF when the pilot pressure becomes P₁.

Similarly to the case in Fig. 5(A), a timing at which the purging is finished and the piston of the electromagnetic valve 70 is moved upward so that the electromagnetic valve 70 is turned OFF, is the time t₀. Moreover, similarly to the case in Fig. 5(A), a timing at which the third air-operated valve 90 is turned OFF, and the second part 87 of the fifth channel 85 is connected to the third part 88, is the time t₁. Then, a timing at which the first air-operated valve 62 is turned OFF, and the first channel 61 is closed, is a time t₂.

The pilot pressure of the first air-operated valve 62' indicated by the two-dot chain line in Fig. 5(A) gently deceases taking a comparatively long period of time after the electromagnetic valve 70 is turned OFF (i.e., after t₀). Accordingly, the time t₂' when the first channel 61' is closed delays from the time t₁ when the second part 87' of the fifth channel 85' is connected to the third part 88'.

On the other hand, the pilot pressure of the first air-operated valve 62 indicated by the two-dot chain line in Fig. 5(B) rapidly deceases taking a comparatively short period of time after the electromagnetic valve 70 is turned OFF (same as above). Accordingly, it is suppressed that the time t₂ when the first channel 61 is closed delays from the time t₁ when the second part 87 of the fifth channel 85 is connected to the third part 88.

Based on the result described above, the effects of the purging device 40 according to the embodiment described above can be confirmed.

### DESCRIPTION OF REFERENCE CHARACTERS

- 10: Robot System
- 20: Robot
- 21: Container
- 22: Pedestal
- 23: Robotic Arm
- 24: Link
- 26: End Effector
- 30: Robot Controlling Device
- 32: Robot Controlling Part
- 34: Purging Controlling Part
- 35: First Air-controlling Module
- 36: Second Air-controlling Module
- 37: Third Air-controlling Module
- 40: Purging Device
- 42: Gas Supplying Source
- 50: Protective-gas adjusting device
- 52: First Pressure Regulator
- 54: Second Pressure Regulator
- 60: First Discharging Port
- 61: First Channel
- 62: First Air-operated Valve
- 65: Second Discharging Port
- 66: Second Channel
- 67: Second Air-operated Valve
- 70: Electromagnetic Valve
- 71: Cylinder
- 72: Piston
- 73: Purging Channel
- 74: Operation Channel
- 78a: Supplying Part
- 78b: Discharging Part
- 79a: First Downstream Part
- 79b: Second Downstream Part
- 81: Third Channel
- 82: Fourth Channel
- 85: Fifth Channel
- 86: First Part
- 87: Second Part
- 88: Third Part
- 89: Merging Part
- 90: Third Air-operated Valve
- 91: Sixth Channel
- 92: Seventh Channel
- 110: Partition

## Claims

1. A purging device configured to purge by supplying protective gas into a container, comprising:
a protective-gas supplying source;
a first pilot-air supplying source;
a second pilot-air supplying source;
a protective-gas adjusting device adjustable of a pressure value of the protective gas supplied from the protective-gas supplying source into the container to be at a given first pressure value required for purging, and at a given second pressure value required for operation after finishing the purging;
a first channel extending from the container to a first discharging port provided near the container to discharge, from the first discharging port, the protective gas supplied from the protective-gas supplying source into the container;
a first air-operated valve provided to the first channel and switchable of opening and closing of the first channel according to a pilot pressure inputted from the first pilot-air supplying source;
a second channel extending from the first air-operated valve to a second discharging port provided near the first air-operated valve to discharge, from the second discharging port, pilot air inputted from the first pilot-air supplying source into the first air-operated valve;
a second air-operated valve provided to the second channel and switchable of opening and closing of the second channel according to a pilot pressure inputted from the second pilot-air supplying source; and
a pilot-air adjusting device adjustable of the pilot pressure inputted from the first pilot-air supplying source to the first air-operated valve, and the pilot pressure inputted from the second pilot-air supplying source to the second air-operated valve,
wherein, when the purging is performed, the protective-gas adjusting device adjusts the pressure value of the protective gas to be at the given first pressure value, and the pilot-air adjusting device adjusts the pilot pressure inputted to the first air-operated valve to open the first channel, and adjusts the pilot pressure inputted to the second air-operated valve to close the second channel, and
wherein, when the purging is finished, the protective-gas adjusting device adjusts the pressure value of the protective gas to be at the given second pressure value, and the pilot-air adjusting device adjusts the pilot pressure inputted to the first air-operated valve to close the first channel, and adjusts the pilot pressure inputted to the second air-operated valve to open the second channel.

2. The purging device of claim 1, further comprising:
a third channel extending from the pilot-air adjusting device to the first air-operated valve to input pilot air from the pilot-air adjusting device into the first air-operated valve; and
a fourth channel extending from the pilot-air adjusting device to the second air-operated valve to input pilot air from the pilot-air adjusting device into the second air-operated valve, and to discharge through the pilot-air adjusting device the pilot air inputted into the second air-operated valve,
wherein the second channel includes an end part of the third channel on a first air-operated valve side, and a branched part branched from the end part of the third channel on the first air-operated valve side to extend to the second discharging port,
wherein, when the purging is performed, the pilot-air adjusting device adjusts the pilot pressure inputted to the first air-operated valve such that pilot air is inputted into the first air-operated valve through the third channel, and adjusts the pilot pressure inputted to the second air-operated valve such that the pilot air inputted into the second air-operated valve is discharged through the fourth channel and the pilot-air adjusting device, and
wherein, when the purging is finished, the pilot-air adjusting device adjusts the pilot pressure inputted to the first air-operated valve such that the pilot air inputted into the first air-operated valve is discharged from the second discharging port through the second channel, and adjusts the pilot pressure inputted to the second air-operated valve such that pilot air is inputted into the second air-operated valve through the fourth channel.

3. The purging device of claim 1 or 2, wherein at least two of the protective-gas supplying source and the first and second pilot-air supplying sources are included in a single gas supplying source.

4. The purging device of any one of claims 1 to 3, further comprising:
a fifth channel extending from the protective-gas supplying source to the container to supply the protective gas from the protective-gas supplying source into the container; and
a third pilot-air supplying source,
wherein the fifth channel includes:
a first part and a second part extending separately;
a merging part located downstream of the first and second parts and at which the first part and the second part merge; and
a third part extending from the merging part to the container, wherein the protective-gas adjusting device includes:
a first pressure regulator provided to the first part and configured to supply the protective gas into the container at the given first pressure value;
a second pressure regulator provided to the second part and configured to supply the protective gas into the container at the given second pressure value; and
a third air-operated valve provided to the merging part and switchable of whether to connect the first part to the third part, or to connect the second part to the third part, according to a pilot pressure inputted from the third pilot-air supplying source,
wherein, when the purging is performed, the pilot-air adjusting device adjusts the pilot pressure inputted to the third air-operated valve to connect the first part to the third part, and
wherein, when the purging is finished, the pilot-air adjusting device adjusts the pilot pressure inputted to the third air-operated valve to connect the second part to the third part.

5. The purging device of claim 4, further comprising a sixth channel extending from the pilot-air adjusting device to the third air-operated valve to input pilot air from the pilot-air adjusting device into the third air-operated valve, and to discharge the pilot air inputted into the third air-operated valve through the pilot-air adjusting device,
wherein, when the purging is performed, the pilot-air adjusting device adjusts the pilot pressure inputted to the third air-operated valve such that pilot air is inputted into the third air-operated valve through the sixth channel, and
wherein, when the purging is finished, the pilot-air adjusting device adjusts the pilot pressure inputted to the third air-operated valve such that the pilot air inputted into the third air-operated valve is discharged through the sixth channel and the pilot-air adjusting device.

6. The purging device of claim 4 or 5, wherein the third pilot-air supplying source is included in a single gas supplying source together with at least one of the protective-gas supplying source and the first and second pilot-air supplying sources.

7. The purging device of any one of claims 1 to 6, further comprising a first controller configured to control the protective-gas adjusting device, and a second controller configured to control the pilot-air adjusting device.

8. The purging device of any one of claims 1 to 7, wherein the protective-gas supplying source, the first and second pilot-air supplying sources, the protective-gas adjusting device, and the pilot-air adjusting device are disposed in a first area where explosive atmosphere does not exist, and
wherein the first and second discharging ports, the first and second channels, and the first and second air-operated valves are disposed, together with the container, in a second area where explosive atmosphere exists.

9. A robot system, comprising:
the purging device of any one of claims 1 to 8; and
a robot having the container,
wherein the robot includes:
a robotic arm having at least one joint axis;
an end effector provided to a tip end of the robotic arm; and
a robot controlling device configured to control operation of the robotic arm and the end effector, and
wherein the container is configured to define a periphery of at least a part of the robot.

10. The robot system of claim 9, wherein the robot is configured to be a painting robot configured to perform a painting work.

11. A method of purging by supplying protective gas into a container, comprising the steps of:
preparing the purging device of any one of claims 1 to 8, and the container (First Step);
after First Step, attaching the purging device to the container (Second Step);
after First and Second Steps, adjusting, by the protective-gas adjusting device, the pressure value of the protective gas to be at the given first pressure value, and adjusting, by the pilot-air adjusting device, the pilot pressure inputted to the first air-operated valve to open the first channel, and the pilot pressure inputted to the second air-operated valve to close the second channel, and performing purging to the container (Third Step); and
after First to Third Steps, adjusting, by the protective-gas adjusting device, the pressure value of the protective gas to be at the second pressure value, and adjusting, by the pilot-air adjusting device, the pilot pressure inputted to the first air-operated valve to close the first channel, and the pilot pressure inputted to the second air-operated valve to open the second channel, and finishing the purging performed to the container (Fourth Step).
